(19) Europäisches Patentamt / European Patent Office / Office européen des brevets

(11) **EP 2 113 866 A1**

(12) **EUROPEAN PATENT APPLICATION**

(43) Date of publication:
**04.11.2009 Bulletin 2009/45**

(51) Int Cl.:
***G06K 9/00*** *(2006.01)*     ***G06K 9/62*** *(2006.01)*

(21) Application number: **08155309.1**

(22) Date of filing: **28.04.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **BAE Systems PLC**<br>**London SW1Y 5AD (GB)** | (72) Inventor: **The designation of the inventor has not yet been filed**<br><br>(74) Representative: **BAE SYSTEMS plc**<br>**Group IP Department**<br>**Lancaster House**<br>**P.O. Box 87**<br>**Farnborough Aerospace Centre**<br>**Farnborough,**<br>**Hampshire GU14 6YU (GB)** |

(54) **Image processing**

(57) A method and apparatus are provided for analysing a scene, in particular a hyperspectral scene, and for classifying regions within the scene. The method may be used in particular for identifying anomalous (novelty or outlier) features within the scene. In the method, adapted in a preferred embodiment from a known expectation maximisation algorithm, a "measure of outlierness" is determined and used to weight the contribution of training samples of a scene to the component statistics in a statistical model representing features in the scene. Preferably, the measure of outlierness is based upon the v parameter in a Student's t-distribution and the invention provides techniques for parameterising the v parameter and other parameters of the model.

**EP 2 113 866 A1**

**Description**

This invention relates to image processing and in particular to a method and apparatus for classifying the content in a hyperspectral image, for example through classification of regions of one or more pixels appearing in a scene and the detection of anomalies.

The majority of known hyperspectral image processing methods, based around well understood and accepted statistical probability theory as applied to statistical pattern recognition processing, have been developed on the assumption that the spectral data follows a correlated multivariate Gaussian distribution. These known methods include a detection approach such as the RX method described in Reed, I. S., Yu, X., "Adaptive Multiple Band CFAR Detection of an Optical Pattern with Unknown Spectral Distribution", IEEE Transactions on Acoustics, Speech and Signal Processing, Vol. 38, pp. 1760-1770, 1990, or a more classical recognition process such as that described in Fukunaga, K, "Introduction to Statistical Pattern Recognition", Second Edition, Academic Press, 1990.

However, many of the results derived using approaches based on the Gaussian statistical model demonstrate much higher false alarm rates than might be expected. That is, the statistics derived using the recognition methods display heavier than expected tails in their distributions. This effect is noted, and examples may be observed, in Manolakis, D., Shaw, G., "Detection Algorithms for Hyperspectral Imaging Applications", IEEE Signal Processing Magazine, pp. 29-43, January 2002, and in Stein, D. W. J., Beaven, S. G., Hoff, L. E., Winter, E. M., Schaum, A. P., Stocker, A. D., "Anomaly Detection from Hyperspectral Imagery", IEEE Signal Processing Magazine, pp. 58-69, January 2002.

The above-referenced paper by Manolakis and Shaw shows examples of "heavy-tails" in the output of a Mahalanobis distance-based anomaly detector, on hyperspectral imagery, in their figures 14 and 15. These figures also display the results of attempts to fit a mixture of F-distributions to the Mahalanobis distance statistic, or alternatively parameterised members of the Symmetric $\alpha$-Stable (S$\alpha$S) family of distributions. Manolakis & Shaw also note that if the data were to follow a correlated multivariate Student's t-distribution then the Mahalanobis distance statistic would have an F-distribution. In both the mixture of F-distributions and the SaS-derived cases a better match is achieved than for the Gaussian based approach, though methods for parameterising these more exotic distributions are not discussed.

The above-referenced paper by Stein et al. also shows an example of heavy-tails in the Mahalanobis distance statistic in their figure 4. Evidently, there has been an attempt to fit a mixture model to the observed statistic and to obtain a good fit from a mixture of three Gamma distributions. However, it remains unclear how to link the distribution of the observed Mahalanobis distance statistic back to the distribution of the collected hyperspectral image data.

From a first aspect, the present invention resides in a method for classifying regions within a scene, wherein regions within the scene are classified according to their probability of membership of one or more components in a statistical model having a model likelihood of being representative of the content of the scene, the method comprising the steps of:

(i) for each training sample in a training dataset, assigning initial current membership probabilities to each training sample;

(ii) assigning each training sample to one of the components according to its current membership probability;

(iii) for each component, determining the component prior probability and other component statistics, using a measure of outlierness determined for each training sample;

(iv) estimating a new component posterior probability for each training sample using component conditional probabilities derived using said measure of outlierness and said other component statistics; and

(v) repeating steps (ii) to (iv) to improve the model likelihood, using the new component posterior probability for each training sample from step (iv) as the current membership probability for the respective training sample at step (ii).

According to this first aspect of the present invention, inclusion of a measure of outlierness, appropriately formulated, in the calculation of component statistics has been found to provide a more appropriate weighting to the contribution of each of the training samples to those statistics when generating the model. In particular, the measure of outlierness tends to avoid problems in known statistical modelling techniques where distortions arise in the component statistics due to the presence of outliers in the training data.

Preferably, the training dataset comprises one or more regions of the scene. This is particularly the case where a scene is being analysed substantially in real time and an attempt is being made to model the scene, using some or all of the data representing the scene, and then to identify certain regions of the same scene, not necessarily regions that were used in modelling the scene, for closer or different analysis, for example using different sensors. Thus, in a preferred embodiment of the present invention according to this first aspect, the method further comprises the step:

(vi) for a given region in the scene, not part of the training dataset, determining the probability of its membership of one or more components of the statistical model generated in steps (i) to (v) of the method.

The training dataset may comprise all regions of the scene, or it may comprise one or more regions of a different scene. This latter option enables a statistical model of a scene with similar content to be generated and then, some time later, for that model to be used to classify one or more regions of a new scene. This mode of operation may be particularly useful in an aircraft flying over an area of similar scenery, for example a desert, where a statistical model built using data captured from one or more earlier scenes may be used to more rapidly analyse regions of new scenes without needing to generate a new statistical model. Of course, a library of statistical models for different scene types may be generated for later use. The most appropriate model may be selected for use with a new scene as required.

In all cases, scenes may be classified and/or modelled at the pixel level of resolution. Thus a statistical model may be generated on the basis that each training sample comprises data defining a pixel in a respective scene and each of the components in the statistical model represents one or more pixels in the scene. When classifying regions of a scene, each of the regions may comprise a pixel in the scene. This is particularly the case when classifying regions in a hyperspectral scene.

According to preferred embodiments of the present invention the measure of outlierness is determined using the v parameter of a Student's t-distribution applied to weight the contribution of the training sample values to the statistics for each component.

The measure of outlierness may comprise an estimate of the v parameter determined separately for each component at each operation of step (iii) of the method, in combination with a value for the number of components in the statistical model, to weight the contribution of the training sample values to the statistics for each respective component. Alternatively, a common estimated value of the v parameter may be determined for all the components, as determined at each operation of step (iii) of the method. In particular, the estimate of the v parameter may comprise fixing the value of the v parameter to be equal to the number of components in the statistical model at each operation of step (iii) of the method.

The examinations of Manolakis & Shaw and Stein *et al.* referenced above appear to have been carried out very much after the fact, observing, and attempting to fit models to the derived statistic. In contrast, preferred embodiments of the present invention attempt to exploit the hypothesis of a heavy-tailed statistical model in the derivation of the test statistic itself. In a preferred embodiment, the present invention is based on the derivation of an understanding the content of a hyperspectral scene in terms of different ground cover material types. A correlated multivariate Student's t-distribution is used to characterise each material. This results in the derivation of a mixture of t-distributions model for the whole scene which, in turn, leads to a mixture of F-distributions model for the Mahalanobis distance. The latter allows the development of an anomaly (also known as novelty or outlier) detector, with the Mahalanobis distance as the test statistic.

In a preferred embodiment of the present invention, the method further comprises the step of identifying a region of the scene having a probability of membership of one or more components of the statistical model that is below a predetermined threshold. Thus regions that do not appear to correspond to those represented in the statistical model - the so-called outliers - may be readily identified for further analysis.

From a second aspect, the present invention resides in a data processing apparatus programmed to implement the method according to the first aspect of the present invention.

From a third aspect, the present invention also extends to a computer program which, when loaded into a computer and executed, causes the computer to implement the method according to the first aspect of the present invention.

From a fourth aspect, the present invention further extends to a computer program product, comprising a computer-readable medium having stored thereon computer program code means which when loaded into a computer, and executed, cause the computer to implement the method according to the first aspect of the present invention.

Preferred embodiments of the present invention will now be described, by way of example only.

Traditional scene understanding processes applied to hyperspectral imagery make use of, typically, Expectation Maximisation (EM) or Stochastic EM (SEM) type methods to segment a scene into regions of common material type. These methods fall into the class of methods known as "unmixing". In these scene understanding processes it is assumed that the statistics of the materials in the scene may be represented by multivariate Gaussian statistical models and the EM or SEM unmixing processes iteratively calculate the statistics of such distributions (the Expectation step) and then carry out either soft (for EM) or probabilistic (for SEM) reassignment of training samples to mixture model components (the Maximisation step) until convergence.

All but the most bland of hyperspectral scenes are likely to contain small regions of pixels with a spectral signature which differs significantly from those of the bulk of the pixels in the scene. One of the primary aims in using the (EM or SEM) scene understanding (unmixing) process for hyperspectral imagery is that the resulting statistical model provides a good representation of the majority of the pixels in the scene, thereby allowing the small regions of uncommon material to be identified as outliers (also called anomalies or novel pixels/regions). Such processes are useful in, for example, target detection or in prospecting for rare minerals, etc. However, in the most common mode of operation of these scene understanding techniques, the scene used to build (train) the statistical model is the same one in which the outlying pixels are to be found. This can be a problem for scene understanding processes as the anomalous pixels contaminate the model as it is being derived. That is, they may effectively pull or stretch the distribution(s) which form the model away from the mean vectors and covariance matrices which would have been derived had those anomalous pixels not been present. This is a particular problem for Gaussian distributions where the least-squares fitting of data confers the largest influence on the model from the most outlying data samples (the anomalous hyperspectral pixels in this case).

The inventor of the present invention has realised that what is required is a statistical model for a single material component which effectively reduces the influence of the most outlying pixels whilst still representing a good model of the common values, and a way of deriving such a model from a scene of many material types within an unmixing framework. The former requirement for a component statistical model which tolerates outliers without significantly affecting the derived mean and extent statistics may be satisfied by the use of a so-called heavy-tailed distribution. There are many types and variants of heavy-tailed distributions but those known to have been considered include members of the Symmetric $\alpha$-Stable (S$\alpha$S) family of distributions (see Manolakis & Shaw, 2002, referenced above) and an unspecified derived statistic modelled by a mixture of Gamma distributions (see Stein *et al.*, 2002, referenced above). However, in neither of these known approaches is there any apparent motivation for considering the requirement for the model, or a disclosure of means of generating it.

A further type of heavy-tailed distribution is the Student's t-distribution and an approach based on this distribution is the subject of the present invention.

Having established the need for heavy-tailed distributions in representing hyperspectral scenes containing anomalies, a means of parameterising a mixture model comprised of components of this type is required. A set of expectation maximisation schemes suitable for parameterising a statistical mixture of multivariate Student's t-distributions is described in the paragraphs below.

A hyperspectral scene understanding method according to a preferred embodiment of the present invention comprises two principal steps:

(1) Extraction of a mixture model using a training data set representing a selected training region of a given scene. The mixture model comprises a segmentation of the training scene into identifiable components, wherein each component comprises a statistical model representing a distinct identifiable material, for example, in the scene.

(2) Assignment of the pixels of a test area of the scene to components of the extracted mixture model.

Depending upon the particular approach chosen, the training region selected for step (1) may be the whole scene and/or may be coincident with some or all of the test area of step (2). Alternatively, the training region and the test area may be entirely separate.

Preferably, the model extraction process in step (1) uses a variant of the Stochastic Expectation Maximisation (SEM) algorithm to extract a mixture model defining K identifiable components from the training data set. The SEM algorithm is described, for example, in Masson, P., Pieczynski, W., "SEM Algorithm and Unsupervised Statistical Segmentation of Satellite Images", IEEE Transactions on Geoscience and Remote Sensing, Vol. 31, No. 3, pp. 618-633, May 1993. The SEM algorithm, in its standard form, is used to extract the parameters - the mean and covariance matrix for each of the K identifiable components - of a Gaussian mixture model and is itself a development of the Expectation Maximisation (EM) algorithm. For more information on the EM method, reference is made to a paper by Dempster, M. M., Laird, N. M., Rubin, D. B., "Maximum Likelihood from Incomplete Data via the EM Algorithm", Journal of the Royal Statistical Society, Series B, Vol. 39, pp. 1-38, 1977.

The expectation maximisation family of algorithms proceed by iteratively calculating the posterior probability of each sample of a training data set and then by updating the cluster statistics using these posterior probabilities. As the algorithm proceeds the posterior likelihood of the samples is iteratively increased and the algorithm terminates when the changes in posterior probability from one step to the next fall below some pre-determined (user set) threshold.

The conventional SEM algorithm is a variation on the EM approach in which each training data sample is considered to belong to a single component of the mixture model, rather than having its posterior probability distributed among the components. This approach additionally allows the identification of redundant model components which are "explaining" too few of the training data samples. These model components may be eliminated as appropriate, e.g. if the number of pixels representing a given material in a scene is too small for statistical modelling.

According to a preferred embodiment of the present invention, a variation on the conventional SEM algorithm has been devised for use in a hyperspectral scene understanding process, and proceeds as follows:

(i) For each training data sample assign a probability of it belonging to each of K initial components. If no prior information regarding component membership probabilities is available these probabilities may be taken from a uniform distribution.

(ii) Assign each training sample to one of the K components according to the training sample's current membership probability. Membership is denoted by the indicator variable $z_{ik}$ which, for the SEM algorithm, takes a value of one for a single value of the $k$ index for each of the training data samples indexed by $i$; all other values of the $z_{ik}$ are zero.

(iii) Using the current component membership calculate the component prior probability and other component statistics, i.e. the mean vector and covariance matrix for each training data sample. These are determined using the following method.

The method requires the calculation of a pair of auxiliary variables. The first auxiliary variable is the Mahalanobis distance of the $i$th training sample value $x_i$ currently assigned to the $k$th component centre, i.e.,

$$(\Delta'_{ik})^2 = (x_i - \mu'_k)^T (\Sigma'_k)^{-1} (x_i - \mu'_k)$$

where the component statistics $(\mu'_k, \; \Sigma'_k)$ are the previous estimates produced by this SEM algorithm. For the first iteration of this SEM algorithm, maximum likelihood estimates for the previous estimates of the component conditional mean vectors $\mu'_i$ and covariance matrices $\Sigma'_i$ are used.

The second auxiliary variable is a measure of outlier-ness of each sample, given by

$$u_{ik} = \frac{p + \nu'_k}{(\Delta'_{ik})^2 + \nu'_k}$$

where the $\nu'_k$ value used is the previous estimate for the $k$ th component parameter and $p$ is the dimensionality of the data set. This measure of outlierness is intended to weight the contribution of the training sample values $x_i$ to the $k$th component mean and covariance. Note that, as the expected value of the Mahalanobis distance is itself $p$, then the $u$ parameter of a sample will be close to 1, except for outliers. For the first iteration of this SEM algorithm, moment-based estimates for the component conditional $\nu'_i$ parameters are used.

The component prior probability is calculated using

$$p_k = \frac{\sum_{i=1}^{n} z_{ik}}{n} \; .$$

Using the auxiliary variables described above, the new values of the mean and covariance for the $k$th component are

$$\mu_k = \frac{\sum_{i=1}^{n} z_{ik} u_{ik} x_{ik}}{\sum_{i=1}^{n} z_{ik} u_{ik}}$$

and

$$\Sigma_k = \frac{\sum_{i=1}^{n}(z_{ik}u_{ik})(x_{ik}-\mu_{ik})(x_{ik}-\mu_{ik})^T}{\sum_{i=1}^{n}z_{ik}u_{ik}}.$$

Preferred techniques for estimation of the $\nu_k$ or $\nu$ parameter are discussed in detail below.

(iv) Use the calculated statistics to estimate the component posterior probability of each training sample x using the component conditional probability

$$p(x\mid\mu,\Sigma,\nu) = \frac{\Gamma\left(\dfrac{\nu+p}{2}\right)}{\Gamma\left(\dfrac{\nu}{2}\right)(\nu\pi)^{p/2}\mid\Sigma\mid^{1/2}}\left(1+\frac{\Delta^2}{\nu}\right)^{-\frac{\nu+p}{2}},$$

where the $\Delta^2$ is the Mahalanobis distance of the training sample *x* using the current estimates of the component statistics, and the component prior probability.

(v) Assign each training sample to one of the K components according to its current membership (component posterior) probability.

(vi) If any component is too small, reduce K and redistribute the training samples currently assigned to the removed components randomly across all other components, and return to step (iii);

(vii) Repeat from step (iii) until the change in the total model likelihood is smaller than some pre-set threshold.

In the particular case where the training and test datasets are the same, the class assignments of the training samples, carried out in the final pass through step (v) above, are used as the segmentation ($z_{ik}$) of the data representing the scene for display and subsequent processing steps.

Preferred examples of techniques for evaluation of the $\nu$ parameter will now be described in some detail, according to preferred embodiments of the present invention. Preferably, four different methods may be used in two situations. These are:

(A) Based on the moments estimate, specifically using the estimate of the kurtosis;

(B) Using a modification of a scheme outlined in the paper of Shoham *et al.,* referenced above;

(C) Using a Markov-Chain Monte Carlo (MCMC) method; and

(D) By fixing the value to equal the number of components under consideration.

Methods (A)-(C) may be used either for the situation in which each component has a separate $\nu$ value or for the case in which $\nu$ is common across all components. Method (D) is used in the common $\nu$ situation only.

Method (A) is based on an estimate of the kurtosis. The kurtosis is defined in this case by the formula:

$$\kappa = \frac{\mu_4}{\mu_2^2}$$

where $\mu_j$ is the *i*th central moment (so the denominator here is the variance squared). The kurtosis is separately estimated for each component, and for each of the p dimensions of the data (channels/bands), individually, within the component. The average of the respective band kurtosis estimates is taken to form a mean kurtosis for each component.

For the separate $\nu$ case the component kurtosis values are used to extract an estimate of the $\nu$ parameter using the following:

$$\nu_i = \frac{4\kappa_i - 6}{\kappa_i - 3}.$$

where $\nu_i$ is the component estimate of the $\nu$ parameter.

For the common $\nu$ parameter estimation the prior weighted average of the component kurtosis values is calculated using the current estimate of the component prior probability. The resulting common kurtosis estimate is used to calculate the common $\nu$ value as follows:

$$\nu = \frac{4\kappa - 6}{\kappa - 3}.$$

In both the common and separate $\nu$ cases the calculated parameter value is used in the following iteration of the SEM scheme. The kurtosis based estimator of the $\nu$ parameter is very straightforward to program and has a small computational requirement.

Method (B) is a modification to the scheme outlined in the paper by Shoham *et al.*, referenced above. In particular, method (B) uses a modification of the empirical estimator described by Shoham *et al.* The modifications proposed in the present invention relate to the use of the approach of Shoham *et al.* within a Stochastic Expectation Maximisation scheme (with hard component memberships of the samples), rather than in the Expectation Maximisation scheme (with soft component memberships) described in their paper, referenced above.

Method (B) requires the calculation of a sequence of auxiliary variables. The first required is the Mahalanobis distance of the sample (indexed by *i*) currently assigned to the component centre (indexed by *k*), i.e.,

$$\Delta_{ik}^2 = (x_i - \mu_k)^T \Sigma_k^{-1} (x_i - \mu_k)$$

where the components statistics $(\mu_k, \Sigma_k)$ are the current estimates produced by the SEM scheme.

The second auxiliary variable is a measure of outlier-ness of each sample, given by

$$u_{ik} = \frac{p + \nu_k'}{\Delta_{ik}^2 + \nu_k'}$$

where the $\nu_k'$ value used is the previous estimate for the *k*'th component parameter and *p* is the dimensionality of the data set. Note that, as the expected value of the Mahalanobis distance is itself *p*, then the *u* parameter of a sample will be close to 1, except for outliers.

For the separate $\nu$ value case the third auxiliary variable is given by

$$y_k = -\Psi\left(\frac{p + \nu_k'}{2}\right) - \frac{1}{n_k} \sum_{i=1}^{n_k} \left[ \log\left(\frac{2}{\Delta_{ik}^2 + \nu_k'}\right) - u_{ik} \right]$$

where $n_k$ is the number of samples currently assigned to the *k*'th component of the mixture model and $\Psi(\cdot)$ is the digamma function.

Finally the values of the component $\nu$ are calculated using the Shoham *et al.* empirical formula

EP 2 113 866 A1

$$\nu_k = \frac{2}{y_k + \log y_k - 1} + 0.0416 \left( 1 + erf \left( 0.6594 \log \left( \frac{2.1971}{y_k + \log y_k - 1} \right) \right) \right)$$

For the common $\nu$ case the auxiliary variables are given by

$$u_{ik} = \frac{p + \nu'}{\Delta_{ik}^2 + \nu'}$$

where $\nu'$ is the previous estimate of the common $\nu$ parameter, and

$$y = -\Psi\left(\frac{p + \nu'}{2}\right) - \frac{1}{n}\sum_{i=1}^{n}\left[\log\left(\frac{2}{\Delta_{ik}^2 + \nu'}\right) - u_{ik}\right].$$

Here the $\nu$ value itself is given by

$$\nu = \frac{2}{y + \log y - 1} + 0.0416 \left( 1 + erf \left( 0.6594 \log \left( \frac{2.1971}{y + \log y - 1} \right) \right) \right)$$

The modified Shoham *et al.* scheme of method (B) is a little more involved in its programming, but is still relatively straightforward and of low computational requirements.
The third approach, method (C), uses a Markov-Chain Monte Carlo (MCMC) method to infer the $\nu$ parameter using current estimates of the other parameters. As with methods (A) and (B), method (C) may be applied either separately to each component or across all components resulting in a common $\nu$ estimate. The MCMC method provides a large toolbox of techniques for statistical inference. The method (C) is based around the proposal of a new potential value for the parameter over which inference is being carried out, then either acceptance or rejection of this proposed value depending on how it affects the likelihood of observing the supplied data. The acceptance probability in a standard MCMC scheme is given by

$$j = \min\left(1, \frac{p(\underline{x}|\theta')}{p(\underline{x}|\theta)} \frac{p(\theta')}{p(\theta)} \frac{p(\theta|\theta')}{p(\theta'|\theta)}\right).$$

Here the first ratio term is the ratio of likelihoods of observing the data under the proposed model with parameter set θ' and current model with parameter set θ, the second ratio is of the prior probabilities of the two parameter sets and the final ratio is of the proposal distributions of the current parameter set given the proposed values and vice versa. For an introduction to these methods see, for example, Green, P. J., "A Primer on Markov chain Monte Carlo" in Complex Stochastic Systems, pp. 1-62, Barndorff-Nielsen, O. E., Cox, D. R. and Kluppelberg, C. (eds.), Chapman and Hall, London, (2001).
The MCMC scheme in method (C) uses the current values for the component mean vectors $\mu_k$, covariance matrices $\Sigma_k$, and sample Mahalanobis distances $\Delta_{ik}^2$ (calculated as above). The likelihood ratios within the scheme are calculated using the probability density function for Student's t-distributed random variables, that is,

$$p(x \mid \mu, \Sigma, \nu) = \frac{\Gamma\left(\frac{\nu + p}{2}\right)}{\Gamma\left(\frac{\nu}{2}\right)(\nu\pi)^{p/2} \mid \Sigma \mid^{1/2}} \left(1 + \frac{\Delta^2}{\nu}\right)^{-\frac{\nu + p}{2}}.$$

The MCMC scheme has a single parameter for inference at any time. For the separate $\nu$ case this is the $\nu_k$ of each component in turn whilst for the common $\nu$ case all components are treated together.

For the parameter prior probabilities, non-informative priors are chosen such that the prior ratio is always 1. For the proposal distribution the log-normal is selected using the current value as the mean and with a tuneable variance. This is an example of a random walk on the log-scale method which simplifies evaluation of the proposal ratio and naturally constrains the $\nu$ estimate to positive values as required. The variance of the proposal distribution may be adjusted to constrain the MCMC acceptance ratio to the desirable range (typically 25%-45%).

The MCMC approach has many aspects in its favour when carrying out statistical inference. Not least is the production of a posterior sample of the parameter or parameters of interest which may then be used in Bayesian inference. However, for the application considered here the MCMC approach is probably "overkill" and, in addition, has several features which make it unduly complicated. These include:

- Significant computational requirements in the calculation of the model likelihood value for the proposed parameter;

- Problems assessing convergence and mixing, and;

- No clear way to select or extract a single parameter value from the posterior sample generated by the MCMC scheme.

Whilst using several of the above-discussed methods (A) - (C), it has been noticed that the derived values for the $\nu$ parameter often either converged to values close to that of the number of components in the mixture model, or when calculated appeared to have such a value. Therefore, a further method (D) is proposed comprising fixing the common $\nu$ value to the number of components. Clearly this is the simplest scheme for setting the value of the parameter with the smallest programming and computational requirements.

Four methods, (A) to (D), have been suggested for the evaluation of the $\nu$ parameter in the SEM method for Student's t-distribution mixture models. Three of the methods may be used on a component-wise basis and all may be used within a common $\nu$-based model. Best results were observed, for the hyperspectral data examined, for the common $\nu$ based schemes. Beyond that, little difference in performance has been observed between the different parameterisation schemes. As such, method (A) has been favoured in typical applications of the present invention, it being simple, quick and reasonably adaptable to all situations observed.

## Claims

1.  A method for classifying regions within a scene, wherein regions within the scene are classified according to their probability of membership of one or more components in a statistical model having a model likelihood of being representative of the content of the scene, the method comprising the steps of:

    (i) for each training sample in a training dataset, assigning initial current membership probabilities to each training sample;
    (ii) assigning each training sample to one of the components according to its current membership probability;
    (iii) for each component, determining the component prior probability and other component statistics, using a measure of outlierness determined for each training sample;
    (iv) estimating a new component posterior probability for each training sample using component conditional probabilities derived using said measure of outlierness and said other component statistics; and
    (v) repeating steps (ii) to (iv) to improve the model likelihood, using the new component posterior probability for each training sample from step (iv) as the current membership probability for the respective training sample at step (ii).

2.  The method according to claim 1, wherein the training dataset comprises one or more regions of the scene.

**3.** The method according to claim 1 or claim 2, further comprising the step:

(vi) for a given region in the scene, not part of the training dataset, determining the probability of its membership of one or more components of the statistical model generated in steps (i) to (v) of the method.

**4.** The method according to claim 1, wherein the training dataset comprises all regions of the scene.

**5.** The method according to claim 1 or claim 3, wherein the training dataset comprises one or more regions of a different scene.

**6.** The method according to any one of the preceding claims, wherein each training sample comprises data defining a pixel in a respective scene.

**7.** The method according to any one of the preceding claims, wherein each of the components in the statistical model represents one or more pixels in the scene.

**8.** The method according to any one of the preceding claims, wherein each of said regions comprise a pixel in the scene.

**9.** The method according to any one of the preceding claims, wherein said measure of outlierness is determined using the $\nu$ parameter of a Student's t-distribution applied to weight the contribution of the training sample values to the statistics for each component.

**10.** The method according to claim 9, wherein said measure of outlierness comprises an estimate of the v parameter determined separately for each component at each operation of step (iii) of the method, in combination with a value for the number of components in the statistical model, to weight the contribution of the training sample values to the statistics for each respective component.

**11.** The method according to claim 9, wherein said measure of outlierness comprises an estimate for a common value of the v parameter for all the components, determined at each operation of step (iii) of the method, in combination with a value for the number of components in the statistical model, to weight the contribution of the training sample values to the statistics for each respective component.

**12.** The method according to claim 11, wherein said estimate of the v parameter comprises fixing the value of the v parameter to be proportional to the number of components in the statistical model at each operation of step (iii) of the method.

**13.** The method according to any one of the preceding claims, further comprising the step of identifying a region of the scene having a probability of membership of one or more components of the statistical model that is below a predetermined threshold.

**14.** A data processing apparatus programmed to implement the method according to any one of claims 1 to 13.

**15.** A computer program, which when loaded into a computer and executed, causes the computer to implement the method according to any one of claims 1 to 13.

**16.** A computer program product, comprising a computer-readable medium having stored thereon computer program code means which when loaded into a computer, and executed, cause the computer to implement the method according to any one of claims 1 to 13.

**European Patent Office**

## EUROPEAN SEARCH REPORT

Application Number

EP 08 15 5309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEDASANI S ET AL: "A new typicality-based weight function for robust mixture decomposition" SYSTEMS, MAN, AND CYBERNETICS, 1997. COMPUTATIONAL CYBERNETICS AND SIM ULATION., 1997 IEEE INTERNATIONAL CONFERENCE ON ORLANDO, FL, USA 12-15 OCT. 1997, NEW YORK, NY, USA,IEEE, US, vol. 1, 12 October 1997 (1997-10-12), pages 205-210, XP010248911 ISBN: 978-0-7803-4053-4 * the whole document * | 1-8, 13-16 | INV. G06K9/00 G06K9/62 |
| X | TIMOTHY E SMETEK ET AL: "Finding Hyperspectral Anomalies Using Multivariate Outlier Detection" AEROSPACE CONFERENCE, 2007 IEEE, IEEE, PI, 1 March 2007 (2007-03-01), pages 1-24, XP031103809 ISBN: 978-1-4244-0524-4 * abstract * * page 1, left-hand column, paragraph 1 - right-hand column, paragraph 1 * * page 2, left-hand column, paragraph 3 - right-hand column, paragraph 2 * * page 5, right-hand column, paragraph 4 - page 6, left-hand column, paragraph 1 * | 1-8, 13-16 | |
| D,A | DIMITRIS MANOLAKIS ET AL: "Detection Algorithms for Hyperspectral Imaging Applications" IEEE SIGNAL PROCESSING MAGAZINE, IEEE SERVICE CENTER, PISCATAWAY, NJ, US, vol. 19, no. 1, 1 January 2002 (2002-01-01), pages 29-43, XP011093744 ISSN: 1053-5888 * the whole document * | 1-16 | TECHNICAL FIELDS SEARCHED (IPC)  G06K |

-/--

The present search report has been drawn up for all claims

| Place of search | Date of completion of the search | Examiner |
|---|---|---|
| Munich | 1 August 2008 | Müller, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 08 15 5309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VELLIDO ET AL: "Missing data imputation through GTM as a mixture of t-distributions" NEURAL NETWORKS, ELSEVIER SCIENCE PUBLISHERS, BARKING, GB, vol. 19, no. 10, 27 November 2006 (2006-11-27), pages 1624-1635, XP005781847 ISSN: 0893-6080 * abstract * | 1-16 | |
| A | MASSON P ET AL: "SEM algorithm and unsupervised statistical segmentation of satellite images" IEEE TRANSACTIONS ON GEOSCIENCE AND REMOTE SENSING USA, vol. 31, no. 3, May 1993 (1993-05), pages 618-633, XP002490735 ISSN: 0196-2892 * the whole document * | 1-16 | |

TECHNICAL FIELDS SEARCHED (IPC)

The present search report has been drawn up for all claims

| Place of search | Date of completion of the search | Examiner |
|---|---|---|
| Munich | 1 August 2008 | Müller, Martin |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Reed, I. S. ; Yu, X.** Adaptive Multiple Band CFAR Detection of an Optical Pattern with Unknown Spectral Distribution. *IEEE Transactions on Acoustics, Speech and Signal Processing,* 1990, vol. 38, 1760-1770
- **Fukunaga, K.** Introduction to Statistical Pattern Recognition. Academic Press, 1990
- **Manolakis, D. ; Shaw, G.** Detection Algorithms for Hyperspectral Imaging Applications. *IEEE Signal Processing Magazine,* January 2002, 29-43
- **Stein, D. W. J. ; Beaven, S. G. ; Hoff, L. E. ; Winter, E. M. ; Schaum, A. P. ; Stocker, A. D.** Anomaly Detection from Hyperspectral Imagery. *IEEE Signal Processing Magazine,* January 2002, 58-69

- **Masson, P. ; Pieczynski, W.** SEM Algorithm and Unsupervised Statistical Segmentation of Satellite Images. *IEEE Transactions on Geoscience and Remote Sensing,* May 1993, vol. 31 (3), 618-633
- **Dempster, M. M. ; Laird, N. M. ; Rubin, D. B.** Maximum Likelihood from Incomplete Data via the EM Algorithm. *Journal of the Royal Statistical Society, Series B,* 1977, vol. 39, 1-38
- A Primer on Markov chain Monte Carlo. **Green, P. J.** Complex Stochastic Systems. Chapman and Hall, 2001, 1-62